(19) Europäisches Patentamt
European Patent Office
Office européen des brevets

(11) **EP 2 477 351 A1**

(12) **EUROPEAN PATENT APPLICATION**
published in accordance with Art. 153(4) EPC

(43) Date of publication:
**18.07.2012  Bulletin 2012/29**

(21) Application number: **10788980.0**

(22) Date of filing: **25.06.2010**

(51) Int Cl.:
**H04J 14/02** (2006.01)

(86) International application number:
**PCT/CN2010/074508**

(87) International publication number:
**WO 2010/145584 (23.12.2010 Gazette 2010/51)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **10.10.2009  CN 200910181126**

(71) Applicant: **ZTE Corporation
Shenzhen, Guangdong 518057 (CN)**

(72) Inventors:
• **LIU, Yu
Shenzhen
Guangdong 518057 (CN)**

• **ZHANG, Hongyu
Shenzhen
Guangdong 518057 (CN)**
• **XU, Kun
Shenzhen
Guangdong 518057 (CN)**
• **ZHOU, Ying
Shenzhen
Guangdong 518057 (CN)**

(74) Representative: **Price, Nigel John King
J A Kemp
14 South Square
Gray's Inn
London WC1R 5JJ (GB)**

(54) **METHOD AND SYSTEM FOR REALIZING MULTI-DIRECTIONAL RECONFIGURABLE OPTICAL ADD-DROP MULTIPLEXING**

(57) A method and system for realizing multi-directional reconfigurable optical add-drop multiplexer are provided, and the system includes: N optical preamplifiers, N demultiplexing units and M optical crossbar switches; the method includes: amplifying optical signals sent from N directions respectively, and dividing the optical signals in each direction into M groups of optical signals with different wavelengths; then transmitting N groups of demultiplexed optical signals with same wavelength in each direction to the same optical crossbar switch, and each optical crossbar switch receiving N groups of optical signals with same wavelength; each optical crossbar switch outputting the inputted optical signals from the corresponding output interfaces according to configuration information, wherein M and N are positive integers. The design of the method is simple, and the equipment can be easily implemented, and the number of input and output ports of the optical crossbar switch can be flexibly selected, and when there are a relatively large number of line directions, it has a significant cost advantage.

FIG. 3

**Description**

Technical Field

The present invention relates to the reconfigurable optical add-drop multiplexer (ROADM) and optical cross technology in the field of optical communications, and more especially, to a method and system for realizing multi-directional ROADM.

Background of the Related Art

Currently, the DWDM (Dense Wavelength Division Multiplexing) equipment has been widely applicable to the backbone network, the local and metropolitan core networks, and the DWDM equipment network topology also transits from simple point-to-point to the ring network and two ring intersection, and it ultimately will be applied to the lattice network and mesh network. The service type transits from the Time Division multiplex (TDM) service based circuit switch services to Internet Protocol (IP) based data services. Due to the uncertainty of the service development and the increase of estimation difficulty in the early stage, there are requirements for the equipment intelligence, and when the network topology as well as the service distribution changes, it is expected that the service scheduling capability is implemented quickly and flexibly to adapt to the change of the networking and the service distribution.

Similar to the method that the synchronous digital hierarchy (SDH) equipment exchanges and schedules the VC-4, the network intelligence requests the DWDM equipment to provide wavelength based configurable function, that is, the wavelength configurable optical add-drop multiplexing function to flexibly achieve the wavelength add-drop multiplexing function and the remote configuration. The ROADM can achieve any point to any point connection without manual deployment or implement the Add and Drop of single wavelength as well as the straight-through configuration. The ROADM technology can be used to increase the flexibility of the Wavelength Division Multiplexing (WDM) network, to enable the operators to remotely and dynamically control the wavelength transmission path, which effectively reduce the operator's operating and maintenance costs. With the development of the network scale and the diversity of service types, it is required to provide the multi-directional intelligent ROADM system that can implement the service broadcast function.

There are multiple methods for achieving the ROADM function, comprising the optical switch array based Micro-Electro-Mechanical Systems (MEMS) approach and the current novel optical device based implementation approach. Wherein, the novel optical devices mainly include the wavelength blocker (WB) and the wavelength selective switch (WSS).

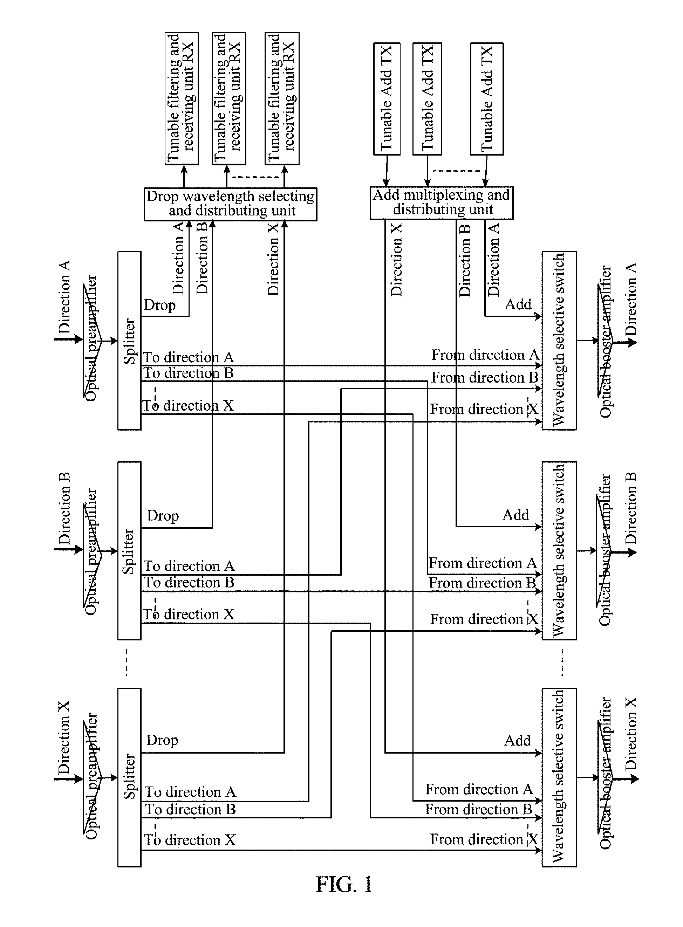

At present, the wavelength selective switch is utilized to achieve the structure of reconfigurable optical add-drop multiplexer with the wavelength independence and the direction independence, which is shown in FIG. 1. Taking the A direction for example, the light coming from the A direction is amplified by the optical preamplifier and then output to the splitter, and the splitter splits power evenly to other directions and the Drop, the light with the desired wavelength is selected to pass by the wavelength selective switch and the Drop wavelength selecting and distributing unit respectively, and during the Drop, the tunable filtering and receiving unit finally receives the electrical-variable signal, and any wavelength in the A direction can be crossed to any direction via the optical booster amplifier. The light from the tunable Add is divided by the Add multiplexing and distributing unit into lights in A - X directions, and the wavelength selective unit in each direction respectively selects the light with the desired wavelength to pass. Currently, the WSS is used to achieve reconfigurable Drop. Due to the production restrictions, the WSS is expensive, and the WSS devices having more than 9 ports are immature, therefore a large number of WSS are needed when implementing the Add and Drop of a large number of wavelengths, which makes the equipment cost and size of this scheme too large. Moreover, this scheme can only achieve partial wavelength independence, that is, the Drop wavelengths in each wavelength selecting and distributing unit cannot be the same, the Add wavelengths in each multiplexing and distributing unit cannot be the same either.

Summary of the Invention

The technical problem to be solved in the present invention is to provide a method and system for implementing multi-directional reconfigurable OADM to overcome the shortcomings that the WSS based multi-directional ROADM equipment is expensive and the Add and Drop of the same wavelength are restricted.

To solve the aforementioned problem, the present invention provides a method for implementing multi-directional reconfigurable optical add-drop multiplexer, comprising:

Amplifying optical signals transmitted from N directions respectively, and then performing demultiplexing respectively, dividing optical signals in each direction into M groups of optical signals with different wavelengths, and then transmitting N groups of demultiplexed optical signals with same wavelength in each direction to the same optical crossbar switch, and each optical crossbar switch receiving N groups of optical signals with same wavelength; each optical crossbar switch outputting input optical signals from corresponding output interfaces according to configuration information; wherein M and N are both positive integers.

The aforementioned method might also have the following feature:

the step of transmitting N groups of demultiplexed optical signals with same wavelength in each direction to the same optical crossbar switch comprises: inputting a $k^{th}$ group of demultiplexed optical signals in each direction to a $k^{th}$ optical crossbar switch, wherein $1 \leq k \leq M$.

The aforementioned method might also comprise:

After an Add wavelength tunable transmitter completes wavelength tuning of a service access signal, dividing optical signals into L directions and inputting the signals to L Add H×H optical crossbar switches respectively; the L Add H×H optical crossbar switches inputting the optical signals to the M optical crossbar switches via M groups of output ports of optical crossbar switches, where each group is composed of R/2 ports; wherein L is a positive integer.

The aforementioned method might also comprise:

when the output interfaces outputting the optical signals correspond to a straight-through direction, the output optical signals are multiplexed and then transmitted along the straight-through direction.

The aforementioned method might also comprise:

when the output interface outputting the optical signals corresponds to Drop, after an Drop optical crossbar switch connecting with the output interface receives the optical signals, it exchanging the optical signals to a corresponding direction, and after multiplexed into one path of signal, selecting one path of signal for output by a filtering selection and receiving unit.

The present invention also provides a system for implementing multi-directional reconfigurable OADM, comprising: N Optical Preamplifiers (OPAs), N demultiplexing units and M optical crossbar switches;
said N OPAs are respectively configured to: amplify and send received optical signals from each corresponding direction to a corresponding demultiplexing unit;
the demultiplexing units are configured to: divide the received and amplified optical signals into M groups of optical signals with different wavelengths, up to x optical signals in each group;
each demultiplexing unit comprises at least Mxx output interfaces, and every x output interfaces connect with x input interfaces of one optical crossbar switch, and optical signals output by output interfaces in each demultiplexing unit connected with the input interfaces of each optical crossbar switch have the same wavelength;
each optical crossbar switch is configured to: exchange input optical signals to a corresponding output interface in accordance with configuration information; wherein M, N and x are all positive integers.
The aforementioned system might also comprise N multiplexing units;
every x output interfaces in said each optical crossbar switch are connected with one multiplexing unit;
said multiplexing unit is configured to: multiplex and output the optical signals received from the corresponding output interface.

The aforementioned system might also have the following feature:

a $k^{th}$ group of output ports of said each demultiplexing unit are connected with a $k^{th}$ crossbar switch, and a $k^{th}$ group of output ports in said each optical crossbar switch are connected with a $k^{th}$ multiplexing unit; wherein, $1 \leq k \leq M$.

The aforementioned system might also comprise: P Add wavelength tunable transmitters, P first splitters and L Add optical crossbar switches;
said P Add wavelength tunable transmitters are respectively connected with said P first splitters, and said Add wavelength tunable transmitters are configured to: tune a wavelength of received service access signal and then send the signal to a corresponding first splitter;
each of said first splitters comprises at least L output interfaces, and each interface is connected with one said Add optical crossbar switch, and the Add optical crossbar switches connected with the output interfaces in the same direction are same; said first splitter is configured to: divide the received optical signals into L directions and respectively input the signals to L said Add optical crossbar switches;

RxM/2 output ports in the L Add optical crossbar switches are connected with the input interfaces of the M optical crossbar switches, and every R/2 output ports are connected with one said optical crossbar switch; the Add optical crossbar switch is configured to: exchange the input optical signals to the corresponding output interface for output according to the configuration information; wherein, L is a positive integer.

The aforementioned system might also comprise: L Drop optical crossbar switches, P second splitters and P receiving units;

$R \times M/2$ input ports in the L Drop optical crossbar switches are connected with the $R \times M/2$ output interfaces of the M optical crossbar switches, and a $p^{th}$ output signal of each Drop optical crossbar switch is connected with a $p^{th}$ second splitter, and the Drop optical crossbar switch is configured to: exchange the received optical signals to the corresponding output port for output according to the configuration information thereof; wherein $1 \leq p \leq H$;

each second splitter is connected with one receiving unit, and the second splitter is configured to: after multiplexing the received optical signals into one path of signal, output said one path of signal to the receiving unit which is connected with the second splitter;

said receiving unit is configured to: receive optical signals.

The method and system provided in the present invention have the following advantages: the design of the method is simple, and the equipment can be easily implemented; the number of input and output ports of the optical crossbar switch can be flexibly selected; when there are a relatively large number of line directions, it has a significant cost advantage.

Brief Description of Drawings

FIG. 1 is a structural diagram of a system for implementing multi-directional ROADM optical wavelength selection in the related art;

FIG. 2 is a wiring schematic diagram of the ROADM node equipment in the line direction in accordance with an embodiment the present invention;

FIG. 3 is a wiring schematic diagram of the Add and Drop of the ROADM node equipment in accordance with an embodiment of the present invention;

FIG. 4 is a schematic diagram of a system for implementing four-directional ROADM node in accordance with an embodiment of the present invention.

Preferred Embodiments of the Present Invention

The technical solution of the present invention will be described in further detail in the following in combination with the accompanying drawings and the specific embodiments.

The basic idea of the method in the present invention is: after amplifying optical signals transmitted from N directions, the optical signals are demultiplexed, and the optical signals in each direction are divided into M groups of optical signals with different wavelengths, and then N groups of demultiplexed optical signals with the same wavelength in each direction are transmitted to the same optical crossbar switch, and each optical crossbar switch receives N groups of the optical signals with the same wavelength; each optical crossbar switch exchanges the input optical signals to the corresponding output interface according to the configuration information; wherein, M and N are both positive integers.

In addition, when the output interface outputting the optical signals corresponds to the straight-through direction, the output optical signals are multiplexed and then transmitted in the straight-through direction.

Preferably, the $k^{th}$ group of demultiplexed optical signals in each direction are input to the $k^{th}$ optical crossbar switch, wherein $1 \leq k \leq M$.

After the Add wavelength tunable transmitter completes wavelength tuning of the service access signal, the splitter splits the optical signals into L portions and respectively inputs the signals to the L Add $H \times H$ optical crossbar switches; in the $L \times H$ output ports of L optical crossbar switches, (R*M)/2 ports can be randomly selected and divided into M portions which are respectively input to the M $R \times R$ optical crossbar switches. Therefore, the Add from any of p tunable transmitters to any direction with any wavelength can be achieved.

Correspondingly, the (R*M)/2 signals in the M optical crossbar switches are input to the input ports of L Drop optical crossbar switches. Preferably, the optical signal at the first output port of each Drop optical crossbar switch is input to the first Lx 1 splitter, and the second output signal is input to the second $L \times 1$ splitter, and so on, and the $p^{th}$ output signal is input to the $p^{tn}$ $L \times 1$ splitter. The optical signals output by the $L \times 1$ splitters 1~p are respectively input to the 1~pth receiving units RXs. Therefore, the Drop from any direction with any wavelength to any of the p receiving units can be achieved.

The system in the present invention also comprises: N Optical Preamplifiers (OPAs), N demultiplexing units and M optical crossbar switches, and N multiplexing units;

the N OPAs are respectively used to receive the optical signals from each corresponding direction, and divide the optical signals into M groups of optical signals with different wavelengths, up to x optical signals for each group; each OPA has at least M groups of output ports, and each group has x output interfaces, every x output interfaces are connected with x input interfaces of one optical crossbar switch, and the optical signals output by the output interfaces of each OPA connected with the input interfaces of each optical crossbar switch have the same wavelength;

every x output interfaces of each optical crossbar switch is connected with one multiplexing unit; and is used to exchange the input optical signals to the specified output interface according to the configuration information, and output the optical signals from the output interface to the multiplexing unit in the corresponding direction;

said multiplexing unit is used to multiplex and output the received optical signals.

Wherein, M, N and x are all positive integers.

Preferably, the $k^{th}$ group of output ports of each demultiplexing unit is connected with the $k^{th}$ crossbar switch, wherein $1 \leq k \leq M$. The $k^{th}$ group of output ports in each crossbar switch can be connected with the $k^{th}$ multiplexing unit.

The ROADM equipment provided in the present invention comprises:

1) Optical preamplifiers in the directions 1 ~ N;

2) q-channel demultiplexing units in the line directions of the directions 1 ~ N;

3) the R×R optical crossbar switches 1~M;

4) q-channel multiplexing units in the line directions of the directions 1 to N;

5) Optical Booster Amplifiers (OBA) in the directions 1~N;

6) The Add/Drop HxH optical crossbar switches 1~2*L;

7) The IxL splitter of the Add units 1~p;

8) The Lxl splitters of the Drop units 1~p;

9) Tunable Add transmitter TX;

10) Filtering selection and receiving unit RX;

11) Connection optical fiber between various units.

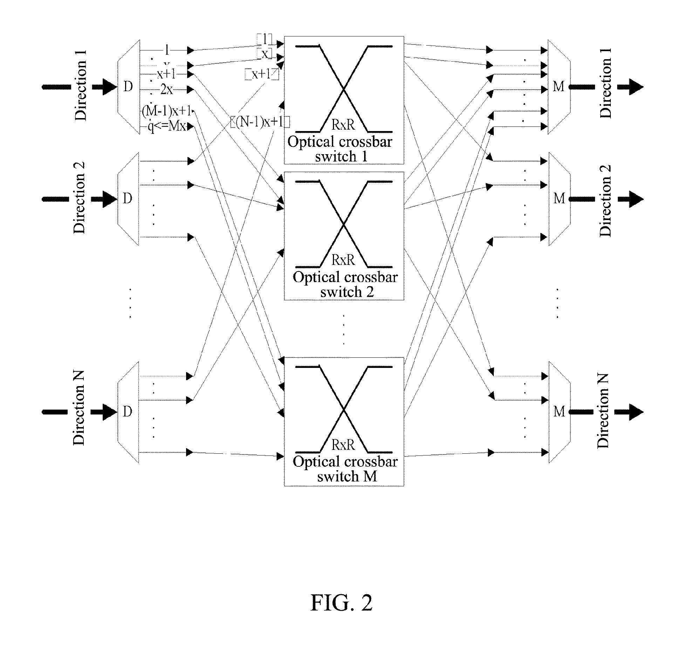

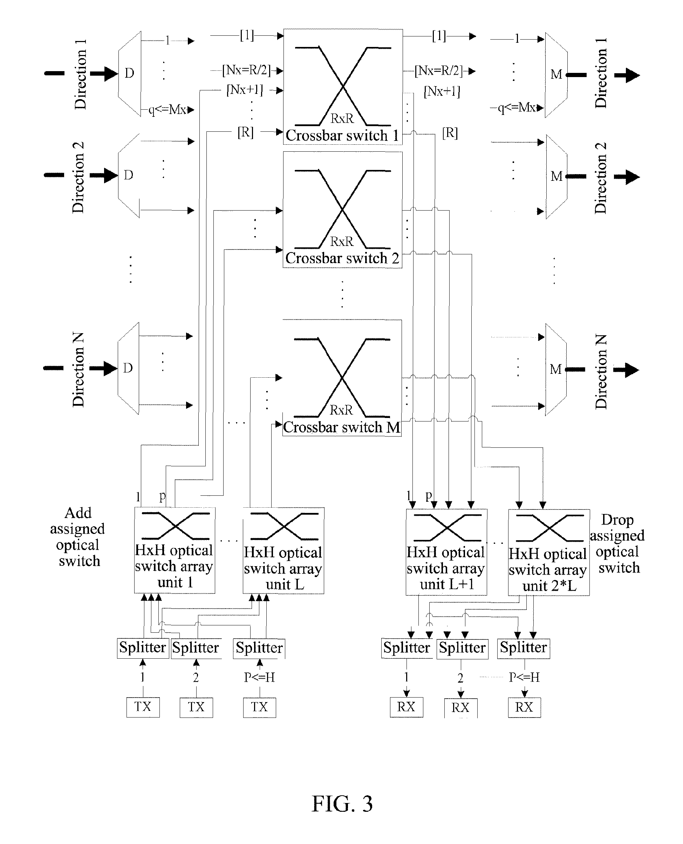

The present invention uses the method of wavelength grouping and crossing, and the q channels in each direction are divided into M groups, and it is assumed that each group has x channels. The connection relationship of the line direction is shown in FIG. 2, and the connection relationship of Add and Drop is shown in FIG. 3. The specific function of each part and its connection relationship are described as follows:

(1) the optical preamplifiers in the directions 1~N respectively receive the input signals in the corresponding directions, and amplify the optical signals to ensure the straight-through power and the Drop receiving power in the direction;

(2) the amplified optical signals in each direction are input to the multiplexing unit in each direction. After the demultiplexing unit, all wavelengths are separated into individual optical channels. The optical signals of the first group of wavelengths (1~x channels) in each direction are accessed to the input ports of the first optical crossbar switch, and the optical signals of the second group of wavelengths ((x+1)~2x channels) in each direction are accessed to the second optical crossbar switch, and so on, the optical signals of the $M^{th}$ group of wavelengths are accessed to the $M^{th}$ optical crossbar switch.

(3) the optical signals output by the optical crossbar switches are connected to the multiplexing units in the directions 1~N in accordance with the same grouping method as the input grouping method. N*x output ports of each optical crossbar switch are extracted and divided into N groups, the first group of the output ports of each optical crossbar switch are accessed to the multiplexing unit in the direction 1, the second group of the output ports are accessed to the multiplexing unit in the direction 2, and so on, and the $N^{th}$ group of the output ports are accessed to the multiplexing unit in the direction N;

(4) the optical signals output by the multiplexing units in the directions 1~N are accessed to the optical booster amplifiers in the directions 1~N to achieve the amplification of the optical signals in the direction so as to ensure the transmission performance.

The Add unit is composed of the tunable Add transmitters TX, the 1xL splitters, the Add HxH optical crossbar switches, and part of input ports of the RxR optical crossbar switches.

The connection relationship of the Add unit is as follows: after the Add wavelength tunable transmitters complete the wavelength tuning of the service access signal, the signal is split by p 1xL splitters into L portions which are respectively input to the L Add HxH optical crossbar switches. In the L*H output ports of the L optical crossbar switches, (R*M)/2 ports are randomly selected and divided into M portions which are respectively input to the M RxR optical crossbar switches. Thus the Add from any of the p tunable transmitters to any direction with any wavelength can be achieved.

The Drop unit is composed of the receiving units RX, the Lx 1 splitter, the Drop HxH optical crossbar switches, and part of the output ports of the RxR optical crossbar switch.

The connection relationship of the Drop unit is as follows: the R/2 output optical signals of each of the 1~M R×R optical crossbar switches are counted up to (R*M)/2 signals which are input to the input ports of the L Drop H×H optical crossbar switches. The optical signal at the first output port of each Drop H×H optical crossbar switch is input to the first Lx 1 splitter, the second output signal is input to the second Lx 1 splitter, and so on, and the $p^{th}$ output signal is input to the $p^{th}$ Lx 1 splitter. The optical signals output by the Lx 1 splitters 1~p are respectively input to the 1~p receiving units RX. Thus the Drop from any direction with any wavelength to any of p receiving units can be achieved.

The method for designing the multi-directional ROADM equipment given in the present invention is as follows: the number of given directions is N, the number of channels in each direction is q, and the numbers of ports of optical crossbar switch are R and H, and the number of Add/Drop channels is p.

When R>2*N and p<=H are met, the equipment can be realized. With the following formula, the numbers of the RxR and HxH optical crossbar switches M and L and the number of wavelengths x in each wavelength group can be acquired, and when there is decimal, the result can be rounded up.

$$x=R/(2*N) \qquad (1)$$

$$M=q/x \qquad (2)$$

$$L = N*q/H \qquad (3)$$

After each parameter of the equipment is determined, the equipment can be constructed according to the aforementioned connection relationship.

The 4-directional ROADM equipment can be designed according to the method given in the present invention, and there are 80 wavelengths in each direction, and the 128x128 optical crossbar switch is used, then:

the number of Add/Drop channels: p=128;

the number of wavelengths in each group: x =R/(2*N) =128/(2*4)=16

the number of optical switches in the line direction: M=q/x = 80/16 = 5

the number of optical switches in the Add/Drop direction: L=N*q/H=4*80/128=3

The equipment for implementing a reconfigurable optical add-drop multiplexer (ROADM) according to the present invention comprises:

1) the optical preamplifiers (OPAs) in the directions 1~4;

2) the 80-channel demultiplexing units in the line directions of the directions 1~4;

3) the 128x128 optical crossbar switches 1~5;

4) the 80-channel multiplexing units in the line directions of the directions 1~4;

5) the optical booster amplifiers (OBAs) in the directions 1~4;

6) the Add/Drop 128x128 optical crossbar switches 1~6;

7) the 1x3 splitters of the Add channels 1~128;

8) the 3x1 splitters of the Drop channels 1~128;

9) the tunable Add transmitters TX of the Add channels 1~128;

10) the filtering selection and receiving units RX of the Drop channels 1~128;

11) the connection optical fiber between various units.

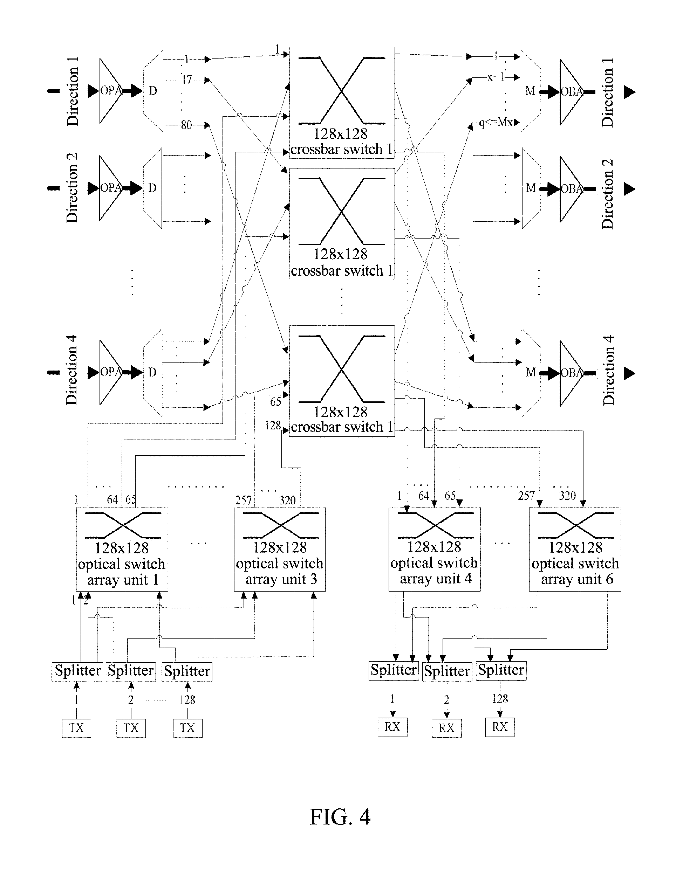

The specific connection relationship is shown in FIG. 4.

The optical preamplifiers in the directions 1~4 respectively receive the input signals in the corresponding directions and amplify the optical signals to ensure the straight-through power and the Drop receiving power in the direction.

The optical signals amplified by the optical preamplifiers in the directions 1~4 are input to the demultiplexing units in the corresponding directions. After the demultiplexing units, the 80 wavelengths in each direction are split into individual optical channels. The optical signals of the first group of wavelengths (1~16 channels) in each direction are accessed to the input port of the first optical crossbar switch, and the optical signals of the second group of wavelengths (17~32 channels) are accessed to the second optical crossbar switch, and so on, the optical signals of the $S^{th}$ group of wavelengths (65~80 channels) are accessed to the $5^{th}$ optical crossbar switch.

The optical signals output by the optical crossbar switches are connected to the multiplexing units in the directions 1~4 in accordance with the same grouping method as the input grouping method. 64 output ports of each optical crossbar switch are extracted and divided into 4 groups, the first group of each optical crossbar switch is accessed to the multiplexing unit in the direction 1, the second group is accessed to the multiplexing unit in the direction 2, and so on, and the $5^{th}$ group is accessed to the multiplexing unit in the direction 5;

The optical signals output by the multiplexing units in the directions 1~4 are accessed to the optical booster amplifiers in the directions 1~4 to achieve the amplification of the optical signals in these directions so as to ensure the transmission performance.

The Add unit is composed of the tunable Add transmitters TX, the 1x3 splitters, the Add 128x128 optical crossbar switches, and part of the input ports of the optical crossbar switches in the line direction.

The connection relationship of the Add unit is as follows: after the Add wavelength tunable transmitters complete the wavelength tuning of a service access signal, the signal is split by the 128 1x3 splitters into 3 portions which are respectively input to 3 Add 128x128 optical crossbar switches. At the 384 output ports of the 3 optical crossbar switches, 320 ports are randomly selected and divided into 5 portions that are respectively input to the optical crossbar switches in the five line directions. Thus the Add from any of the 128 tunable transmitters to any direction with any wavelength can be achieved.

The Drop unit is composed of the filtering selection and receiving units RX, the 3x1 splitters, the Drop 128x128 optical crossbar switches, and part of the output ports of the optical crossbar switch in the line direction.

The connection relationship of the Drop unit is as follows: the 64 output optical signals of each of the optical crossbar switches in the 5 line directions are counted up to 320 signals which are input to the input ports of the 3 Drop 128x128 optical crossbar switches. The optical signal at the first output port of each Drop 128 x 128 optical crossbar switch is input to the first 3x1 splitter, the second output signal is input to the second 3x1 splitter, and so on, and the $128^{th}$ output signal is input to the $128^{th}$ 3x1 splitter. The optical signals output by the 3x1 splitters 1~128 are respectively input to the 1~128 receiving units RX. Thus the Drop from any direction with any wavelength to any of the 128 receiving units can be achieved.

In summary, the present invention can be used to achieve the following functions:

1. Flexible wavelength scheduling function between different line directions;

2. wavelength configurable Add and Drop function;

3. wavelength loopback function: the optical signal transmitted from the direction 1 can be crossed through the configuration, but it still access to the direction;

4. the routing protection function of the wavelength; if the directions 1 and 2 can reach the same receiving end after passing through several nodes, when the direction 1 fails, the optical signal can be crossed to the direction 2 to be transmitted, thus to achieve the protection, and the routing means automatically searching for the protection path;

5. add multiple optical signals with same wavelength in the node;

6. drop the optical signals with the same wavelength in different directions;

7. the wavelength signals in any direction can be added or dropped at all Add and Drop ports.

Of course, the present invention might have a variety of other embodiments, and without departing from the spirit and essence of the present invention, those skilled in the field can make the corresponding modifications and variations according to the present invention, and all these modifications and variations should belong to the protection scope of the appended claims in the present invention.

Industrial Applicability

For the method and system in the present invention, the designing method is simple, and the equipment can be easily implemented; the number of input and output ports of the optical crossbar switch can be flexibly selected; when there are a relatively large number of line directions, it has a significant cost advantage.

**Claims**

**1.**   A method for implementing multi-directional reconfigurable optical add-drop multiplexer (ROADM), comprising:

Amplifying optical signals transmitted from N directions respectively, and then performing demultiplexing respectively, dividing optical signals in each direction into M groups of optical signals with different wavelengths, and then transmitting N groups of demultiplexed optical signals with same wavelength in various directions to the same optical crossbar switch, and each optical crossbar switch receiving N groups of optical signals with same wavelength; and
each optical crossbar switch outputting input optical signals from corresponding output interfaces according to configuration information; wherein M and N are both positive integers.

**2.**   The method of claim 1, wherein,
the step of transmitting N groups of demultiplexed optical signals with same wavelength in various directions to the same optical crossbar switch comprises: inputting a $k^{th}$ group of demultiplexed optical signals in each direction to a $k^{th}$ optical crossbar switch, wherein $1 \leq k \leq M$.

**3.**   The method of claim 1, wherein the method further comprises:

After an Add wavelength tunable transmitter completes wavelength tuning of a service access signal, dividing optical signals into L directions and inputting the optical signals to L Add H×H optical crossbar switches respectively; and
said L Add H×H optical crossbar switches inputting the optical signals to M optical crossbar switches via M groups of output ports of optical crossbar switches, where each group is composed of R/2 ports; wherein L is a positive integer.

**4.**   The method of any one of claims 1~3, further comprising:

when the output interfaces outputting the optical signals correspond to a straight-through direction, output optical signals being multiplexed and then transmitted in the straight-through direction.

5. The method of any one of claims 1~3, further comprising:

when the output interface outputting the optical signals corresponds to Drop, after an Drop optical crossbar switch connecting with the output interface receives the optical signals, exchanging the optical signals to a corresponding direction, and after multiplexed into one path of signal, selecting one path of signal for output by a filtering selection and receiving unit.

6. A system for implementing multi-directional ROADM, comprising: N Optical Preamplifiers (OPAs), N demultiplexing units and M optical crossbar switches;
said N OPAs being respectively configured to: amplify and send received optical signals from each corresponding direction to a corresponding demultiplexing unit;
the demultiplexing units being configured to: divide received and amplified optical signals into M groups of optical signals with different wavelengths, up to x optical signals in each group;
each demultiplexing unit comprising at least Mxx output interfaces, and every x output interfaces connecting with x input interfaces of one optical crossbar switch, and optical signals output by output interfaces in each demultiplexing unit connected with the input interfaces of each optical crossbar switch having same wavelengths;
each optical crossbar switch being configured to: exchange input optical signals to a corresponding output interface in accordance with configuration information;
wherein M, N and x are all positive integers.

7. The system of claim 6, further comprising N multiplexing units;
every x output interfaces in said each optical crossbar switch being connected with one multiplexing unit;
said multiplexing unit being configured to: multiplex and output optical signals received from the corresponding output interface.

8. The system of claim 6 or 7, wherein,
a $k^{th}$ group of output ports of said each demultiplexing unit are connected with a $k^{th}$ crossbar switch, and a $k^{th}$ group of output ports in said each optical crossbar switch are connected with a $k^{th}$ multiplexing unit; wherein, $1 \leq k \leq M$.

9. The system of claim 6, further comprising: P Add wavelength tunable transmitters, P first splitters and L Add optical crossbar switches;
said P Add wavelength tunable transmitters being respectively connected with said P first splitters, and said Add wavelength tunable transmitters being configured to: tune a wavelength of received service access signal and then send signals to a corresponding first splitter;
each of said first splitters comprising at least L output interfaces, and each interface being connected with one said Add optical crossbar switch, and the Add optical crossbar switches connected with the output interfaces in the same direction being same; said first splitter being configured to: divide received optical signals into L directions and respectively input the signals to L said Add optical crossbar switches;
RxM/2 output ports in said L Add optical crossbar switches being connected with the input interfaces of the M optical crossbar switches, and every R/2 output ports being connected with one said optical crossbar switch; said Add optical crossbar switch being configured to: exchange input optical signals to a corresponding output interface for output according to configuration information; wherein, L is a positive integer.

10. The system of claim 6, further comprising: L Drop optical crossbar switches, P second splitters and P receiving units;
$R \times M/2$ input ports in said L Drop optical crossbar switches being connected with $R \times M/2$ output interfaces of the M optical crossbar switches, and a $p^{th}$ output signal of each Drop optical crossbar switch being connected with a $p^{th}$ second splitter, and the Drop optical crossbar switch being configured to: exchange received optical signals to a corresponding output port for output according to configuration information thereof; wherein $1 \leq p \leq H$;
each second splitter being connected with one receiving unit, and the second splitter being configured to: after multiplexing received optical signals into one path of signal, output to the receiving unit which is connected with the second splitter;
said receiving unit being configured to: receive optical signals.

FIG. 1

Direction 1

Direction 2

Direction N

D

1
x+1
2x
(M-1)x+1
q<=Mx

[1]
[x]
[x+1]
[(N-1)x+1]

RxR
Optical crossbar
switch 1

RxR
Optical crossbar
switch 2

RxR
Optical crossbar
switch M

M

Direction 1

Direction 2

Direction N

FIG. 2

FIG. 3

FIG. 4

<div style="text-align:center">

**INTERNATIONAL SEARCH REPORT**

</div>

| | International application No. |
|---|---|
| | PCT/CN2010/074508 |

**A.  CLASSIFICATION OF SUBJECT MATTER**

H04J 14/02 (2006.01) i

According to International Patent Classification (IPC) or to both national classification and IPC

**B.    FIELDS SEARCHED**

Minimum documentation searched (classification system followed by classification symbols)

IPC: H04J 14/-; H04Q 11/-

Documentation searched other than minimum documentation to the extent that such documents are included in the fields searched

Electronic data base consulted during the international search (name of data base and, where practicable, search terms used)

CNPAT; CNKI; WPI; EPODOC; INTERNET

multi-direction, optical, add-drop, multiplex+, amplif+, optical signal, group?, wave, same, wavelength, crossbar, switch??

**C.  DOCUMENTS CONSIDERED TO BE RELEVANT**

| Category* | Citation of document, with indication, where appropriate, of the relevant passages | Relevant to claim No. |
|---|---|---|
| A | CN101136717A (ZTE CORP) 05 Mar. 2008(05.03.2008) see the whole document | 1-10 |
| A | CN101141221A (ZTE CORP) 12 Mar. 2008(12.03.2008) see the whole document | 1-10 |
| A | US2005226620A1 (FEUER M D et al.) 13 Oct. 2005(13.10.2005) see the whole document | 1-10 |
| P, X | CN101667879A (ZTE CORP) 10 Mar. 2010(10.03.2010) see the claims 1-10 | 1-10 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim (S) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&" document member of the same patent family |

| Date of the actual completion of the international search | Date of mailing of the international search report |
|---|---|
| 13 Sep. 2010(13.09.2010) | **21 Oct. 2010 (21.10.2010)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br>CUI, Zhe<br>Telephone No. (86-10)62411849 |
|---|---|

Form PCT/ISA /210 (second sheet) (July 2009)

## INTERNATIONAL SEARCH REPORT
Information on patent family members

International application No.

PCT/CN2010/074508

| Patent Documents referred in the Report | Publication Date | Patent Family | Publication Date |
|---|---|---|---|
| CN101136717A | 05.03.2008 | WO2008028362A1 | 13.03.2008 |
| CN101141221A | 12.03.2008 | None | |
| US2005226620A1 | 13.10.2005 | None | |
| CN101667879A | 10.03.2010 | None | |

Form PCT/ISA /210 (patent family annex) (July 2009)